# EUROPÄISCHE PATENTSCHRIFT

(11) **EP 2 689 553 B1**
(45) Veröffentlichungstag und Bekanntmachung des Hinweises auf die Patenterteilung: **18.03.2015**
(21) Anmeldenummer: 12701452.0
(22) Anmeldetag: 27.01.2012
(51) Int. Cl.: G06F 21/12, H04L 9/08, H04L 9/14

(54) **KRAFTWAGEN-STEUERGERÄT MIT KRYPTOGRAPHISCHER EINRICHTUNG**
MOTOR VEHICLE CONTROL UNIT HAVING A CRYPTOGRAPHIC DEVICE
APPAREIL DE COMMANDE POUR VÉHICULE AUTOMOBILE AVEC DISPOSITIF CRYPTOGRAPHIQUE

(30) Priorität: 22.03.2011 DE 102011014688
(43) Veröffentlichungstag der Anmeldung: 29.01.2014
(73) Patentinhaber: Audi AG, 85045 Ingolstadt (DE)
(72) Erfinder: GEIGER, Stefan, 85055 Inglstadt (DE); LEDENDECKER, Ingo, 85114 Buxheim (DE); SCHMAL, Carsten, 85540 München (DE)
(74) Vertreter: Brandt, Kai
(86) Internationale Anmeldenummer: PCT/EP2012/000362
(87) Internationale Veröffentlichungsnummer: WO 2012/126547

(56) Entgegenhaltungen:
- EP-A1- 1 139 064
- WO-A2-03/019337
- DE-A1-102008 008 108
- DE-A1-102009 025 585
- US-A1- 2004 003 231

## Beschreibung

Die Erfindung betrifft ein Steuergerät für einen Kraftwagen, wobei in dem Steuergerät eine kryptographische Einrichtung zum Ver- und/oder Entschlüsseln einer Nachricht bereitgestellt ist. Die Erfindung betrifft auch einen Kraftwagen mit einem solchen Steuergerät und ein Verfahren zum Konfigurieren des Steuergeräts für die Verwendung in dem Kraftwagen.

In einem Kraftwagen werden durch einzelne Steuergeräte Funktionalitäten, wie z.B. eine Motorsteuerung, eine Navigationsassistenz oder Telephonie, bereitgestellt. Die Steuergeräte sollen nicht durch unautorisierte Personen zwischen einzelnen Kraftwagen ausgetauscht werden können. So sollen zum einen keine gestohlenen Steuergeräte in anderen Kraftwagen verwendet werden können. Zum anderen kann der Einbau eines gebrauchten Steuergeräts in einen Kraftwagen durch eine ungeschulte Person die Sicherheit eines Benutzers des Kraftwagens gefährden.

Aus der DE 10 2006 040 228 A1 ist ein Identifikationssystem für Steuergeräte in einem Kraftwagen bekannt, mittels welchem überprüft werden kann, ob ein Steuergerät von einer autorisierten Person in den Kraftwagen eingebaut wurde. Dazu wird ein Identifikationscode des Kraftwagens mit einem (privaten) kryptographischen Schlüssel eines asymmetrischen Verschlüsselungsverfahrens verschlüsselt und der verschlüsselte Identifikationscode in dem Steuergerät gespeichert. Mittels eines Prüfgeräts kann der verschlüsselte Identifikationscode später wieder aus dem Steuergerät ausgelesen, auf der Grundlage eines komplementären kryptographischen Schlüssels (öffentlicher Schlüssel) entschlüsselt und dann überprüft werden.

Aus der WO 2005/116834 A1 ist ein Verfahren zur Authentisierung eines Steuergeräts in einem Fahrzeug bekannt. Danach sendet das Steuergerät eine Authentisierungsanfrage an eine Authentisierungsvorrichtung des Fahrzeugs, bevor es eine Funktionalität bereitstellt. Durch die Authentisierungsvorrichtung wird die Authentisierungsanfrage mittels eines kryptographischen Schlüssels verschlüsselt und anschließend an das Steuergerät zurückgesendet. In dem Steuergerät wird anhand des zurückgesendeten Verschlüsselungsergebnisses überprüft, ob das Steuergerät für das Fahrzeug authentisiert ist.

In der EP 1 139 064 A1 ist ein Navigationssystem beschrieben, bei dem überprüft wird, ob ein Nutzer von Daten, wie zum Beispiel Straßenkartendaten, zur Nutzung dieser Daten berechtigt ist. Zur Freischaltung der Nutzungsrechte an einer Datei ist vorgesehen, dass der Nutzer zunächst einen ersten und zweiten chiffrierten Code in das Navigationssystem eingibt. Mit einer Gerätekennung des Navigationssystems und dem ersten chiffrierten Code wird zunächst ein Schlüssel berechnet. Mit dem Schlüssel sind auch die Dateien verschlüsselt, sodass mit dem Schlüssel die Dateien gelesen werden können.

Die US 2004/0003231 A1 zeigt ein Steuergerät für einen Kraftwagen. Das Steuergerät authentifiziert sich gegenüber dem Kraftwagen mit einem Challenge-Response-Verfahren und der Kraftwagen authentifiziert sich gegenüber dem Steuergerät mit einem Challenge-Response-Verfahren. Dabei wird z. B. dem Steuergerät ein privater Schlüssel und ein Zertifikat mit dem dazugehörigen öffentlichen Schlüssel zugeordnet. Das Fahrzeug prüft das Zertifikat und sendet eine Challenge an das Steuergerät. Das Steuergerät verschlüsselt die Challenge mit dem privaten Schlüssel und sendet sie als Response zurück. Das Fahrzeug kann die Response mit dem öffentlichen Schlüssel entschlüsseln und prüfen. Das gleiche Verfahren kann auch von dem Steuergerät durchgeführt werden. Durch die gegenseitige Authentifizierung wird das Steuergerät an das Fahrzeug gebunden.

Die DE 10 2009 025 585 A1 zeigt ein Verfahren zur Freischaltung einer Fahrzeugfunktion in einem Steuergerät aufgrund eines Funktonsaktivierungscodes. Der Freischaltcode wird aus der Fahrgestellnummer und der Seriennummer des Steuergeräts gebildet und mit einem privaten Schlüssel signiert. Das Steuergerät überprüft die Signatur, die Fahrgestellnummer und die Seriennummer und aktiviert die Fahrzeugfunktion entsprechend.

In der DE 10 2008 008 108 A1 wird eine Funktion durch einen Freischaltcode freigeschaltet, wobei der Freischaltcode mit einem dem Fahrzeug zugeordneten Schlüssel verschlüsselt wird und mithilfe eines einem Nutzer zugeordneten Mobiltelefons entschlüsselt wird. Somit ist der Freischaltcode an das Fahrzeug und an den Nutzer gebunden.

Die WO 03/019 337 A2 zeigt ein Verfahren, bei dem eine Software für ein Fahrzeugsteuergerät erst ausgeführt wird, wenn ein Freischaltcode-Zertifikat vorhanden ist und eine Signatur anhand eines gespeicherten öffentlichen Schlüssels geprüft wurde. Außerdem enthält der Freischaltcode die Fahrgestellnummer und die Steuergerätenummer, um die Nutzung der Software auf die Kombination aus Fahrgestellnummer und Steuergerätnummer zu beschränken.

Es ist Aufgabe der vorliegenden Erfindung, eine Möglichkeit bereitzustellen, damit ein bestimmtes Steuergerät oder eine bestimmte Funktionalität desselben nur in einem bestimmten Kraftwagen verwendet werden kann.

Die Aufgabe wird durch einen Kraftwagen gemäß Anspruch 1 und ein Verfahren gemäß Anspruch 6 gelöst. Vorteilhafte Weiterbildungen der Erfindung sind durch die Unteransprüche gegeben.

In dem Steuergerät des erfindungsgemäßen Kraftwagens sind ein erster kryptographischer Schlüssel und ein zweiter kryptographischer Schlüssel gespeichert. Zusätzlich ist eine kryptographische Einrichtung bereitgestellt, die dazu ausgelegt ist, eine erste Nachricht zunächst mit einem der kryptographischen Schlüssel zu verschlüsseln, anschließend ein Ergebnis der Verschlüsselung mit dem anderen kryptographischen Schlüssel zu verschlüsseln und schließlich ein Ergebnis der zweiten Verschlüsselung als dritten kryptographischen Schlüssel für eine Ver- und/oder Entschlüsselung einer weiteren Nachricht bereitzustellen.

Kryptographische Schlüssel sind als solche bereits von digitalen kryptographischen Verfahren bekannt. Bevorzugt handelt es sich im Zusammenhang mit der Erfindung bei den Schlüsseln jeweils um solche für ein symmetrisches Verschlüsselungsverfahren. Als Nachricht wird die Eingabe für einen Ver- bzw. Entschlüsselungsalgorithmus bezeichnet. Sie kann aus einer Zeichenfolge (Buchstaben oder Zahlen), einem einzelnen Zeichen oder allgemein einer Bitfolge beliebiger vorgegebener Länge bestehen.

Eine Verschlüsselung der weiteren Nachricht mittels des dritten Schlüssels ergibt stets ein Verschlüsselungsergebnis, das sowohl von dem ersten als auch von dem zweiten Schlüssel abhängt. Dadurch kann in dem Steuergerät durch Vorgabe eines entsprechenden ersten und eine entsprechenden zweiten Schlüssels erzwungen werden, dass der verschlüsselten weiteren Nachricht sowohl ein Identifikationsmerkmal des Steuergeräts selbst als auch des Kraftwagens, in welchem das Steuergerät nur betrieben werden darf, aufgeprägt wird. Mittels des dritten kryptographischen Schlüssels ist die kryptographische Einheit dabei in der Lage, mit nur einem einzigen Verschlüsselungsvorgang die weitere Nachricht in Abhängigkeit von sowohl dem ersten als auch dem zweiten vorgegebenen Schlüssel zu verschlüsseln. Somit ergibt sich im Vergleich zur Vorgabe lediglich eines einzigen Schlüssels keine Einbuße bezüglich des Zeit- und Berechnungsaufwandes. Entsprechendes gilt auch für eine Entschlüsselung.

Der erste kryptographische Schlüssel ist ein für das Steuergerät individuell erzeugter Schlüssel. Dann ist in einem Kraftwagen bei einem Austausch eines authentifizierten Steuergeräts durch ein anderes, nicht authentifiziertes Steuergerät, dieses neu eingesetzte Gerät nicht in der Lage, für das authentifizierte Gerät bestimmte, verschlüsselte Nachrichten zu entziffern.

Der zweite kryptographische Schlüssel ist ein kraftwagenspezifischer Schlüssel. Entsprechend weist der erfindungsgemäße Kraftwagen zumindest ein erfindungsgemäßes Steuergerät auf, in welchem der gespeicherte zweite kryptographische Schlüssel ein individuell für diesen Kraftwagen erzeugter Schlüssel ist. Dann kann das jeweilige Steuergerät nur die für diesen Kraftwagen verschlüsselten Nachrichten verarbeiten bzw. nur ebensolche Nachrichten erzeugen. Ein aus dem Kraftwagen gestohlenes Steuergerät kann somit in vorteilhafter Weise in keinem anderen Kraftwagen verwendet werden.

Um den zweiten kryptographischen Schlüssel beim Einbau des Steuergeräts in einen bestimmten Kraftwagen in einfacher Weise festgelegen zu können, weist das erfindungsgemäße Steuergerät bevorzugt eine Einrichtung zum Empfangen eines kryptographischen Schlüssels von außerhalb des Steuergeräts und zum Festlegen des empfangenen Schlüssels als den zweiten kryptographischen Schlüssel auf. Dadurch ergibt sich der Vorteil, dass auch ein gebrauchtes Steuergerät in einem Kraftwagen wiederverwendet werden kann, indem der zweite Schlüssel in dem Steuergerät entsprechend ange passt wird. Das erfindungsgemäße Steuergerät ist dann durch erneutes doppeltes Verschlüsseln der ersten Nachricht in der Lage, den dritten Schlüssel zum Ver- bzw. Entschlüsseln der weiteren Nachricht neu zu erzeugen.

Die erste Nachricht ist bevorzugt in dem Steuergerät gespeichert. Dann genügt das Abspeichern des neuen fahrzeugspezifischen Schlüssels, und das

Steuergerät ist in der Lage, selbständig den weiteren (dritten) Schlüssel zu erzeugen.

Mit dem erfindungsgemäßen Verfahren kann zumindest ein erfindungsgemäßes Steuergerät für die Verwendung in einem Kraftwagen entsprechend konfiguriert werden. Gemäß dem Verfahren wird für jedes Steuergerät ein kryptographischer Schlüssel erzeugt, wobei für jedes Steuergerät ein anderer, individueller Schlüssel erzeugt wird. Es wird ein weiterer kryptographischer Schlüssel erzeugt, der dem Kraftwagen als kraftwagenspezifischer Schlüssel zugeordnet wird. In jedem Steuergerät wird der jeweilige individuelle Schlüssel als erster Schlüssel und der kraftwagenspezifische Schlüssel als zweiter Schlüssel abgespeichert. Mit dem Verfahren ist in vorteilhafter Weise sichergestellt, dass jedes Steuergerät eine einmalige Kombination aus einem geräteindividuellen und einem fahrzeugspezifischen Schlüssel aufweist.

Gemäß einem weiteren Aspekt der Erfindung weist das erfindungsgemäße Steuergerät eine Freischalteinrichtung zum Freischalten einer Funktionalität des Steuergeräts in Abhängigkeit von einem Freischaltcode auf, welcher von außerhalb des Steuergeräts vorgebbar ist. Die Freischalteinrichtung ist dazu ausgelegt, eine für die freizuschaltende Funktionalität stehende Nachricht mittels der kryptographischen Einrichtung mit dem dritten kryptographischen Schlüssel zu verschlüsseln, ein Ergebnis der Verschlüsselung mit dem Freischaltcode zu vergleichen und die Funktionalität in Abhängigkeit von dem Vergleich freizuschalten. Der Freischaltcode ist bevorzugt in der gleichen Weise gebildet, so dass sich ein zum Freischaltcode identisches Verschlüsselungsergebnis ergibt, wenn das Steuergerät im richtigen Fahrzeug verwendet wird. Diese Weiterbildung des erfindungsgemäßen Steuergeräts weist den Vorteil auf, dass ein Freischaltcode verwendet werden kann, der eine Freischaltung für genau ein bestimmtes Steuergerät in genau einem bestimmten Kraftwagen ermöglicht.

Entsprechend wird das erfindungsgemäße Verfahren vorteilhaft weitergebildet, wenn für jedes Steuergerät eine Kopie des individuellen Schlüssels und eine Kopie des kraftwagenspezifischen Schlüssels außerhalb der Steuergeräte gespeichert werden. Zum Freischalten einer Funktionalität eines der Steuergeräte wird dann auf der Grundlage des entsprechenden, außerhalb des Steuergeräts gespeicherten individuellen Schlüssels sowie des außerhalb des Steuergeräts gespeicherten kraftwagenspezifischen Schlüssels ein Freischaltcode erzeugt und an das freizuschaltende Steuergerät übermittelt. Durch Speichern der geräteindividuellen Schlüssel und des fahrzeugspezifischen Schlüssels kann jederzeit für ein bestimmtes Steuergerät in einem bestimmten Kraftwagen ein benötigter Freischaltcode erzeugt werden.

Die Schlüssel werden bevorzugt in einer zentralen Datenbank außerhalb des Fahrzeugs gespeichert. Auch die zur Erzeugung des dritten Schlüssels nötige erste Nachricht wird in Kopie bevorzugt ebenfalls außerhalb der Steuergeräte gespeichert.

Falls es sich bei dem ersten und dem zweiten Schlüssel um solche für ein asymmetrisches Verschlüsselungsverfahren handelt, wird jeweils anstelle der Kopie des Schlüssels ein dazu komplementärer Schlüssel gespeichert.

Das erfindungsgemäße Steuergerät kann mit einer Komprimiereinrichtung zum Erzeugen einer verkürzten verschlüsselten Nachricht aus einer mittels der kryptographischen Einrichtung verschlüsselten Nachricht weitergebildet werden. Dadurch ergibt sich der Vorteil, dass sehr kurze Zeichenfolgen erzeugbar sind, die dennoch dazu geeignet sind, das Steuergerät für die Verwendung in einem bestimmten Kraftwagen freizuschalten. Die verkürzte verschlüsselte Nachricht ist dabei bevorzugt mittels eines CRC- oder eines Hashverfahrens erzeugbar.

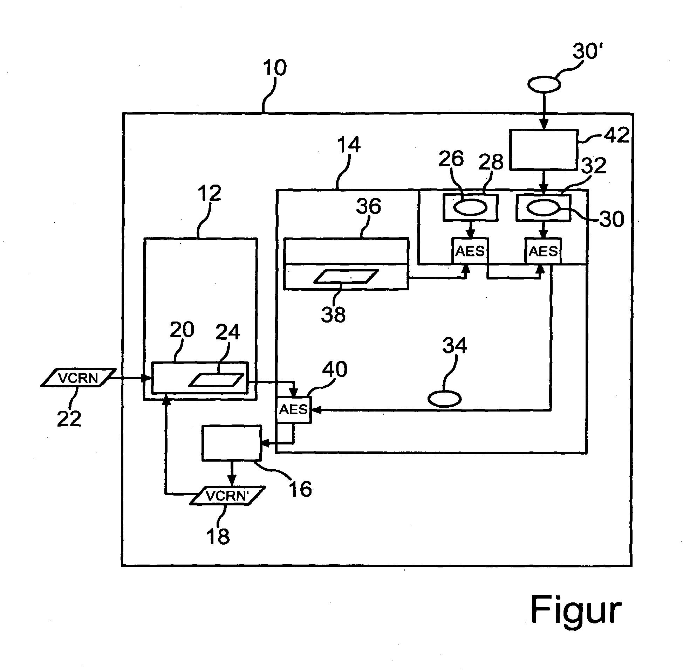

Die Erfindung wird im Folgenden anhand eines Ausführungsbeispiels näher erläutert. Dazu zeigt die einzige Figur eine schematische Darstellung eines Steuergeräts gemäß einer Ausführungsform der Erfindung.

In der Figur ist ein Steuergerät 10 gezeigt, das in einem (nicht näher dargestellten) Personenkraftwagen eingebaut ist. Im Zusammenhang mit dem der Figur zugrunde liegenden Beispiel wird davon ausgegangen, dass es sich bei dem Steuergerät um ein Navigationsgerät des Personenkraftwagens handelt. Es kann sich aber generell um ein Steuergerät handeln, durch welches anstelle der Navigationsassistenz eine beliebige andere Funktionalität bereitgestellt wird.

Eine für die Navigationsassistenz nötige Routenberechnung und eine Erzeugung von Fahranweisungen über eine (nicht dargestellte) digitale Anzeige des Navigationsgeräts wird durch eine Steuereinrichtung 12 gesteuert. Die Steuereinrichtung 12 ist mit einer Verschlüsselungseinrichtung 14 des Steuergeräts 10 gekoppelt. Eine Ausgabe der Verschlüsselungseinrichtung 14 ist an eine Komprimiereinrichtung 16 übertragbar. Ein Ausgabewert 18 der Komprimierungseinrichtung 16 ist an die Steuereinrichtung 12 übertragbar.

Bei der Steuereinrichtung 12, der Verschlüsselungseinrichtung 14 und der Komprimiereinrichtung 16 kann es sich jeweils um eine Schaltungsanordnung des Steuergeräts 10 oder um ein Programm handeln, das von einem Prozessor des Steuergeräts 10 ausgeführt wird.

Die Steuereinrichtung 12 stellt die Funktionalität "Navigationsassistenz" nur bereit, wenn zuvor erkannt wurde, dass es sich bei dem Personenkraftwagen um das Fahrzeug handelt, für welches diese Funktionalität des Steuergeräts 10 auch authentifiziert wurde.

Für dieses Freischalten des Steuergeräts 10 weist die Steuereinrichtung 12 eine Freischaltkomponente 20 auf. Über einen (nicht dargestellten) Kommunikationsbus des Personenkraftwagen (hier einem Diagnosebus) ist ein Freischaltcode 22, beispielsweise während eines Einbaus des Steuergeräts 10 in den Kraftwagen, an das Steuergerät 10 übertragen worden. Innerhalb des Steuergeräts 10 ist der Freischaltcode 22 an die Freischaltkomponente 20 übertragen worden. In dem Freischaltcode 22 ist neben weiteren Daten eine Fahrzeugkennung oder Fahrzeugkomponenten-Referenznummer VCRN (vehicle component reference number) enthalten. Sie besteht in dem Beispiel aus einen 4 Byte langen Code, durch welchen festgelegt ist, welches ganz bestimmte Steuergerät (identifiziert durch seine Seriennummer) für den Personenkraftwagen (identifiziert durch seine Fahrgestellnummer) im Zusammenhang mit der Funktionalität "Navigationsassistenz" authentifiziert ist.

Es kann beispielsweise auch vorgesehen sein, dass das Steuergerät 10 nicht während des Einbaus, sondern erst später von einem Benutzer des Kraftwagens selbst freigeschaltet wird. Dazu kann vorgesehen sein, dass der Freischaltcode über eine Internetverbindung von einer Datenbank zum Kraftwagen übertragen wird und an das Steuergerät 10 übermittelt wird. So kann es dem Benutzer z.B. auch ermöglicht werden, nachträglich weitere Funktionalitäten seines Steuergeräts freizuschalten.

Für die Überprüfung der Authentifizierung des Steuergeräts 10 sendet die Freischaltkomponente 20 eine Zeichenfolge 24, welche für die Funktionalität "Navigationsassistenz" steht, an die Verschlüsselungseinrichtung 18. Die Nachricht kann beispielsweise aus einer Zahl oder einem Text bestehen. Die Zeichenfolge 24 ist als konstantes Datum in der Freischalteinrichtung 20 gespeichert.

Durch die Verschlüsselungseinrichtung 14 wird die Zeichenfolge 24 verschlüsselt. Das Verschlüsselungsergebnis ist in dem dargestellten Beispiel ein 16 Byte langer digitaler Wert. Dieser Wert wird von der Verschlüsselungseinrichtung 14 an die Komprimiereinrichtung 16 übertragen. Die Komprimiereinrichtung 16 bildet aus dem 16 Byte langen Wert den 4 Byte langen Ausgabewert 18, der an die Freischaltkomponente 20 als eine lokale VCRN übertragen wird, d.h. eine VCRN, die innerhalb des Steuergeräts 10 erzeugt wurde. In der Figur ist die lokale VCRN entsprechend als VCRN' bezeichnet.

Die Freischalteinrichtung 20 vergleicht die im Freischaltcode 22 enthaltene VCRN und die lokale VCRN (VCRN'). Sind die beiden Werte identisch, so wird die Steuereinrichtung 14 aktiviert, d.h. das Steuergerät 10 ist dann freigeschaltet. Andernfalls wird die Steuereinrichtung 14 nicht aktiviert, so dass das Steuergerät 10 die Funktionalität "Navigationsassistenz" nicht bereitstellt.

Im Folgenden wird die Verschlüsselung der Zeichenfolge 24 und die anschließende Komprimierung noch einmal näher erläutert.

Die Verschlüsselungseinrichtung hat durch die Verschlüsselung der Zeichenfolge 24 ein Verschlüsselungsergebnis erzeugt, das bei gegebener Zeichenfolge 24 einmalig ist für die Kombination aus dem freizuschaltenden Steuergerät 10 und dem Personenkraftwagen, in welchem das Steuergerät 10 eingebaut ist. Dazu sind in der Verschlüsselungseinrichtung 14 ein steuergeräteindividueller Schlüssel 26 in einem Speicher 28 und ein fahrzeugindividueller Schlüssel 30 in einem Speicher 32 in der Verschlüsselungseinrichtung 14 gespeichert.

Bei den beiden Schlüsseln handelt es sich um kryptographische Schlüssel für ein symmetrisches Verschlüsselungsverfahren. Der Schlüssel 26 wurde bei der Herstellung des Steuergeräts 10 individuell für das Steuergerät 10 erzeugt und in dem Speicher 28 gespeichert. Andere Steuergeräte der gleichen Serie, aber mit anderer Seriennummer, weisen in ihren entsprechenden Speichern andere Schlüssel auf. Der Schlüssel 30 ist individuell für den Personenkraftwagen in dem Sinne erzeugt worden, dass der Personenkraftwagen eine einmalige Fahrgestellnummer aufweist und zu dieser Fahrgestellnummer der Schlüssel 30 erzeugt wurde.

Für die Verschlüsselung der Zeichenfolge 24 wird durch die Verschlüsselungseinrichtung 14 ein dritter, kombinierter Schlüssel 34 mit einer Länge von hier 16 Byte verwendet. Der Schlüssel 34 ist von der Verschlüsselungseinrichtung 14 nach dem Speichern des Schlüssels 30 in dem Speicher 32 erzeugt worden. Dazu ist in einer Konfigurationsdatei 36, die in der Verschlüsselungseinrichtung 14 gespeichert ist, eine Zeichenfolge 38 gespeichert. Die Zeichenfolge 38 kann beispielsweise aus einem Wert oder einem Text bestehen. Die Zeichenfolge 38 wurde mittels eines symmetrischen Verschlüsselungsverfahrens mit dem Schlüssel 26 und das Ergebnis dieser Verschlüsselung mit dem Schlüssel 30 verschlüsselt. Bei dem Verschlüsselungsverfahren handelt es sich in dem Beispiel um ein Verfahren nach dem Advanced Encryption Standard (AES - Erweiterter Verschlüsselungsstandard). Der Schlüssel 34 wird von der Verschlüsselungseinrichtung 14 für eine Verschlüsselung von Nachrichten wie der Zeichenfolge 24 mittels einer weiteren Verschlüsselung (hier ebenfalls nach dem AES) in einer Verschlüsselungskomponente 40 bereitgestellt.

Indem der Schlüssel 34 aus dem steuergeräteindividuellen Schlüssel 26 und dem fahrzeugindividuellen Schlüssel 30 gebildet ist, ergibt sich durch eine Verschlüsselung mit der Verschlüsselungskomponente 40 stets ein Verschlüsselungsergebnis, das sowohl durch die Identität des Steuergeräts 10 als auch durch die Identität des Personenkraftwagens geprägt ist.

Die Komprimiereinrichtung 16 komprimiert das Verschlüsselungsergebnis der Verschlüsselungseinrichtung 40 mittels eines CRC-Verfahrens (CRC - Cyclic redundancy check; Zyklischer Redundanzcheck).

Die im Freischaltcode 22 enthaltene VCRN ist in derselben Weise aus einer Kopie der Zeichenfolge 24 gebildet worden, wie die VCRN' aus der Zeichenfolge 24. Zum Erzeugen des Freischaltcodes 22 wurde aus einer Datenbank anhand der Seriennummer des Steuergeräts 10 und der Fahrgestellnummer des Personenkraftwagens jeweils eine Kopie der Schlüssel 26 und 30 ausgelesen. Die Datenbank wird von dem Hersteller des Personenkraftwagens betrieben. Dem Hersteller ist auch die Zeichenfolge 38 bekannt.

Mittels der Kopien der Schlüssel wurde eine Zeichenfolge, die mit der Zeichenfolge 24 identisch ist, auf die gleiche Weise verschlüsselt und komprimiert, wie es in dem Steuergerät 10 durch die Verschlüsselungseinrichtung 14 und die Komprimiereinrichtung 16 erfolgt. Einen für die Verschlüsselung nötigen, mit dem Schlüssel 34 identischen Schlüssel konnte sich der Hersteller aus den Kopien der Schlüssel 26 und 30 aus der Datenbank und der im bekannten Zeichenfolge 38 erzeugen. Das komprimierte Verschlüsselungsergebnis wurde als VCRN in dem Freischaltcode 22 eingefügt. Das komprimierte Verschlüsselungsergebnis ist immer noch in so hohem Maße steuergeräte- und fahrzeugspezifisch, dass es sehr unwahrscheinlich ist, dass eine aus einem komprimierten Verschlüsselungsergebnis gebildete VCRN zum Freischalten des Steuergeräts 10 in einem anderen Personenkraftwagen geeignet ist.

Um das Steuergerät 10 ausbauen und in einem anderen Personenkraftwagen verwenden zu können, weist das Steuergerät 10 eine Empfangseinrichtung 42 auf, mittels welcher ein fahrzeugindividueller Schlüssel 30' des Personenkraftwagens empfangen und in den Speicher 32 geschrieben werden kann.

Eine Empfangseinrichtung wie die Empfangseinrichtung 42 kann auch für das Beschreiben des Speichers 28 vorgesehen sein. Dann lässt sich der steuergeräteindividuelle Schlüssel 26 zu einem späteren Zeitpunkt z.B. vom Hersteller des Kraftwagens anstelle des Herstellers des Steuergeräts 10 festlegen.

Mit jedem Quertausch des Steuergeräts 10 zwischen zwei Personenkraftwagen wird zusätzlich eine neue VCRN zum Freischalten des Steuergeräts 10 für den jeweiligen Personenkraftwagen durch den Hersteller des Personenkraftwagens erzeugt und dem Benutzer des Personenkraftwagens zum Freischalten des Steuergeräts 10 zur Verfügung gestellt.

Bei einem Steuergerät wie dem Steuergerät 10 kann auch vorgesehen sein, nicht nur die eine Zeichenfolge 24, sonderen mehrere unterschiedliche Zeichenfolgen bereitzustellen. Dann ist eine selektive Freischaltung unterschiedlicher Funktionalitäten des Steuergeräts über unterschiedliche Freischaltcodes möglich.

Die Zeichenfolge 24 kann aber auch aus einem von der freizuschaltenden Funktionalität unabhängigen Wert bestehen. Dann ist es möglich, Freischaltcodes für unterschiedliche Steuergeräte in einem Kraftwagen mit ein und derselben Zeichenfolge zu erzeugen.

Durch das Beispiel ist gezeigt, wie bei einem Steuergerät überprüft werden kann, ob das Steuergerät für den Personenkraftwagen, in dem es eingebaut ist, zugelassen ist.

## Patentansprüche

1. Kraftwagen mit einem Steuergerät (10), wobei in dem Steuergerät (10) sowohl ein erster kryptographischer Schlüssel (26) und ein zweiter kryptographischer Schlüssel (30) gespeichert sind als auch eine kryptographische Einrichtung (14) bereitgestellt und dazu ausgelegt ist, eine erste Nachricht (38) zunächst mit einem der kryptographischen Schlüssel (26) zu verschlüsseln, anschließend ein Ergebnis der Verschlüsselung mit dem anderen kryptographischen Schlüssel (30) zu verschlüsseln und schließlich ein Ergebnis der zweiten Verschlüsselung als dritten kryptographischen Schlüssel (34) für eine Ver- und/oder Entschlüsselung einer weiteren Nachricht (24) bereitzustellen,
**dadurch gekennzeichnet, dass**
der erste kryptographische Schlüssel (26) ein für das Steuergerät (10) individuell erzeugter Schlüssel ist und der zweite kryptographische Schlüssel (30) ein individuell für den Kraftwagen erzeugter Schlüssel ist.

2. Kraftwagen nach Anspruch 1, wobei das Steuergerät (10) eine Einrichtung (42) zum Empfangen eines kryptographischen Schlüssels (30') von außerhalb des Steuergeräts (10) und zum Festlegen des empfangenen Schlüssels (30') als den zweiten kryptographischen Schlüssel (30) aufweist.

3. Kraftwagen nach einem der Ansprüche 1 oder 2, wobei die erste Nachricht (38) in dem Steuergerät (10) gespeichert ist.

4. Kraftwagen nach einem der vorhergehenden Ansprüche, wobei das Steuergerät (10) eine Freischalteinrichtung (12) zum Freischalten einer Funktionalität des Steuergeräts (10) in Abhängigkeit von einem von außerhalb des Steuergeräts (10) vorgebbaren Freischaltcode (22) aufweist, wobei die Freischalteinrichtung (12) dazu ausgelegt ist, eine für die freizuschaltende Funktionalität stehende Nachricht (24) mittels der kryptographischen Einrichtung (14) mit dem dritten kryptographischen Schlüssel (34) zu verschlüsseln, ein Ergebnis (18) der Verschlüsselung mit dem Freischaltcode (22) zu vergleichen und die Funktionalität in Abhängigkeit von dem Vergleich freizuschalten.

5. Kraftwagen nach einem der vorhergehenden Ansprüche, wobei das Steuergerät eine Komprimiereinrichtung (16) zum Erzeugen einer verkürzten verschlüsselten Nachricht (18) aus einer mittels der kryptographischen Einrichtung (14) verschlüsselten Nachricht aufweist, wobei die verkürzte verschlüsselte Nachricht (18) bevorzugt mittels eines CRC- oder eines Hashverfahrens erzeugbar ist.

6. Verfahren zum Konfigurieren zumindest eines Steuergeräts (10) für die Verwendung in einem Kraftwagen, wobei in dem Steuergerät (10) sowohl ein erster kryptographischer Schlüssel (26) und ein zweiter kryptographischer Schlüssel (30) speicherbar sind als auch eine kryptographische Einrichtung (14) bereitgestellt und dazu ausgelegt ist, eine erste Nachricht (38) zunächst mit einem der kryptographischen Schlüssel (26) zu verschlüsseln, anschließend ein Ergebnis der Verschlüsselung mit dem anderen kryptographischen Schlüssel (30) zu verschlüsseln und schließlich ein Ergebnis der zweiten Verschlüsselung als dritten kryptographischen Schlüssel (34) für eine Ver- und/oder Entschlüsselung einer weiteren Nachricht (24) bereitzustellen,
mit den Schritten:
- für jedes Steuergerät (10) Erzeugen eines kryptographischen Schlüssels, wobei für jedes Steuergerät (10) ein anderer, individueller Schlüssel (26) erzeugt wird;
- Erzeugen eines kryptographischen Schlüssels (30), der dem Kraftwagen als kraftwagenspezifischer Schlüssel zugeordnet wird;
- in jedem Steuergerät (10) Abspeichern des jeweiligen individuellen Schlüssels als ersten Schlüssel (26) und des kraftwagenspezifischen Schlüssels als zweiten Schlüssel (30).

7. Verfahren nach Anspruch 6, wobei für jedes Steuergerät eine Kopie des individuellen Schlüssels (26), oder ein für eine asymmetrische Verschlüsselung benötigter dazu komplementärer Schlüssel, und eine Kopie des kraftwagenspezifischen Schlüssels (30), oder ein für eine asymmetrische Verschlüsselung benötigter dazu komplementärer Schlüssel, außerhalb der Steuergeräte gespeichert werden und zum Freischalten einer Funktionalität eines der Steuergeräte auf der Grundlage des entsprechenden, außerhalb des Steuergeräts gespeicherten individuellen Schlüssels sowie des außerhalb des Steuergeräts gespeicherten kraftwagenspezifischen Schlüssels ein Freischaltcode (22) erzeugt und an das freizuschaltende Steuergerät übermittelt wird.

## Claims

1. Motor vehicle comprising a control unit (10), a first cryptographic key (26) and a second cryptographic key (30) being stored in the control unit (10) and a cryptographic device (14) also being provided in the control unit and being designed to first encrypt a first message (38) using one of the cryptographic keys (26), then to encrypt an encryption result using the other cryptographic key (30), and finally to provide a result of the second encryption as a third cryptographic key (34) for encrypting and/or decrypting another message (24), **characterised in that** the first cryptographic key (26) is a key generated individually for the control unit (10) and the second cryptographic key (30) is a key generated individually for the motor vehicle

2. Motor vehicle according to claim 1, wherein the control unit (10) has a device (42) for receiving a cryptographic key (30') from outside the control unit (10) and for defining the received key (30') as the second cryptographic key (30).

3. Motor vehicle according to either claim 1 or claim 2, wherein the first message (38) is stored in the control unit (10).

4. Motor vehicle according to any of the preceding claims, wherein the control unit (10) has an activating device (12) for activating a functionality of the control unit (10) on the basis of an activation code (22) which can be predetermined from outside the control unit (10), wherein the activating device (12) is designed to encrypt, by means of the cryptographic device (14), a message (24), which represents the functionality to be activated, using the third cryptographic key (34), to compare an encryption result (18) with the activation code (22) and to activate the functionality on the basis of the comparison.

5. Motor vehicle according to any of the preceding claims, wherein the control unit has a compressing device (16) for generating a shortened encrypted message (18) from a message encrypted by means of the cryptographic device (14), wherein the shortened encrypted message (18) can preferably be generated by a CRC method or a hash method.

6. Method for configuring at least one control unit (10) for use in a motor vehicle, wherein a first cryptographic key (26) and a second cryptographic key (30) can be stored in the control unit (10) and a cryptographic device (14) is also provided in the control unit and is designed to first encrypt a first message (38) using one of the cryptographic keys (26), then to encrypt an encryption result using the other cryptographic key (30), and finally to provide a result of the second encryption as the third cryptographic key (34) for encrypting and/or decrypting another message (24),
comprising the steps of:
- for each control unit (10), generating a cryptographic key, wherein a different individual key (26) is generated for each control unit (10);
- generating a cryptographic key (30) which is allocated to the motor vehicle as a motor-vehicle-specific key;
- in each control unit (10), storing the respective individual key as the first key (26) and the motor-vehicle-specific key as the second key (30).

7. Method according to claim 6, wherein, for each control unit, a copy of the individual key (26), or a complementary key required for asymmetrical encryption, and a copy of the motor-vehicle-specific key (30), or a complementary key required for asymmetrical encryption, is stored outside the control unit, and an activation code (22) is generated and transmitted to the control unit to be activated in order to activate a functionality of one of the control units on the basis of both the corresponding individual key stored outside the control unit and the motor-vehicle-specific key stored outside the control unit.

## Revendications

1. Véhicule automobile comprenant un appareil de commande (10), dans lequel appareil de commande (10) sont non seulement mémorisées une première clé cryptographique (26) et une seconde clé cryptographique (30), mais également installé un dispositif cryptographique (14) qui est conçu pour coder un premier message (38) tout d'abord avec l'une des clés cryptographiques (26), puis pour coder un résultat du codage avec l'autre clé cryptographique (30) et enfin pour établir un résultat du deuxième codage comme troisième clé cryptographique (34) pour un codage et/ou un décodage d'un autre message (24),
**caractérisé en ce que** :
la première clé cryptographique (26) est une clé produite individuellement pour l'appareil de commande (10) et la deuxième clé cryptographique (30) est une clé produite individuellement pour le véhicule automobile.

2. Véhicule automobile selon la revendication 1, dans lequel l'appareil de commande (10) présente un dispositif (42) pour recevoir une clé cryptographique (30') de l'extérieur de l'appareil de commande (10) et pour spécifier la clé reçue (30') comme deuxième clé cryptographique (30).

3. Véhicule automobile selon la revendication 1 ou la revendication 2, dans lequel le premier message (38) est mémorisé dans l'appareil de commande (10).

4. Véhicule automobile selon l'une quelconque des revendications précédentes, dans lequel l'appareil de commande (10) présente un dispositif de déverrouillage (12) permettant de déverrouiller une fonctionnalité de l'appareil de commande (10) en fonction d'un code de déverrouillage (22) qui peut être affecté de l'extérieur de l'appareil de commande (10), dans lequel le dispositif de déverrouillage (12) est conçu de façon à coder un message (24) destiné à la fonctionnalité à déverrouiller au moyen du dispositif cryptographique (14) avec la troisième clé cryptographique (34), à comparer un résultat (18) du codage au code de déverrouillage (22) et à déverrouiller la fonctionnalité en fonction de la comparaison.

5. Véhicule automobile selon l'une quelconque des revendications précédentes, dans lequel l'appareil de commande présente un dispositif de compression (16) pour produire un message codé réduit (18) à partir d'un message codé au moyen du dispositif cryptographique (14), dans lequel le message codé réduit (18) peut être produit de préférence au moyen d'un procédé CRC ou d'un procédé de hachage.

6. Procédé de configuration d'au moins un appareil de commande (10) pour utilisation dans un véhicule automobile, dans lequel appareil de commande (10) peuvent non seulement être mémorisées une première clé cryptographique (26) et une seconde clé cryptographique (30), mais également installé un dispositif cryptographique (14) qui est conçu pour coder un premier message (38) tout d'abord avec l'une des clés cryptographiques (26), puis pour coder un résultat du codage avec l'autre clé cryptographique (30) et enfin pour spécifier un résultat du deuxième codage comme troisième clé cryptographique (34) pour un codage et/ou un décodage d'un autre message (24),
avec les étapes suivantes :
- pour chaque appareil de commande (10), la production d'une clé cryptographique, dans lequel, pour chaque appareil de commande (10), il est produit une autre clé individuelle (26) ;
- la production d'une clé cryptographique (30) qui est affectée au véhicule automobile comme clé spécifique au véhicule automobile ;
- dans chaque appareil de commande (10), la mémorisation de la clé individuelle respective, comme première clé (26) et celle de la clé spécifique au véhicule automobile comme deuxième clé (30).

7. Procédé selon la revendication 6, dans lequel, pour chaque appareil de commande, on mémorise une copie de la clé individuelle (26) ou une clé complémentaire de celle-ci nécessaire pour un codage asymétrique ou une copie de la clé (30) spécifique au véhicule automobile ou encore une clé complémentaire de celle-ci nécessaire pour un codage asymétrique, de l'extérieur des appareils de commande et l'on produit pour déverrouiller une fonctionnalité d'un des appareils de commande sur la base de la clé individuelle correspondante mémorisée de l'extérieur de l'appareil de commande ainsi que de la clé spécifique au véhicule automobile mémorisée de l'extérieur de l'appareil de commande un code de déverrouillage (22) qui est transmis à l'appareil de commande à déverrouiller.
